(19) Europäisches Patentamt
European Patent Office
Office européen des brevets

(11) **EP 0 687 195 B1**

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(21) Anmeldenummer: 95904391.0

(22) Anmeldetag: **28.12.1994**

(51) Int. Cl.$^6$: **B01D 39/08**

(86) Internationale Anmeldenummer:
**PCT/DE94/01552**

(87) Internationale Veröffentlichungsnummer:
**WO 95/17946 (06.07.1995 Gazette 1995/29)**

(54) **MEHRSCHICHTIGES FILTERMATERIAL**

MULTILAYER FILTER MATERIAL

MATIERE FILTRANTE MULTICOUCHE

(84) Benannte Vertragsstaaten:
**AT BE CH DE FR GB IT LI LU NL SE**

(30) Priorität: **31.12.1993 DE 9320208 U**

(43) Veröffentlichungstag der Anmeldung:
**20.12.1995 Patentblatt 1995/51**

(73) Patentinhaber:
• **Corovin GmbH**
**D-31224 Peine (DE)**
• **KALTHOFF LUFTFILTER UND FILTERMEDIEN GmbH**
**59379 Selm (DE)**

(72) Erfinder:
• **THIELE, Reiner**
**D-31311 Uetze (DE)**

• **BADT, Henrik**
**D-44267 Dortmund (DE)**

(74) Vertreter:
**Thömen, Uwe, Dipl.-Ing.**
**Patentanwälte Thömen & Körner**
**Zeppelinstrasse 5**
**30175 Hannover (DE)**

(56) Entgegenhaltungen:
EP-A- 0 092 819          EP-A- 0 106 908
EP-A- 0 338 479          WO-A-94/01198
DE-U- 9 218 021          US-A- 5 230 800

• **STAUB REINHALTUNG DER LUFT, Bd.53, Nr.3, März 1993, BERLIN DE Seiten 101 - 107, XP303884 E.SCHWEERS & F.LÖFFLER 'Analyse der Struktur technischer Tiefenfilter'**

## Beschreibung

Die Erfindung betrifft ein mehrschichtiges Filtermaterial gemäß dem Oberbegriff des Patentanspruchs 1.

Ein solches mehrschichtiges Filtermaterial ist aus dem deutschen Gebrauchsmuster DE-U-92 18 021.3 bekannt. Die als Grobfilter wirkende erste Schicht ist durch ein Vlies aus Synthese- und/oder Naturfasern gebildet, während die das Feinfilter bildende zweite Schicht ein schmelzgeblasenes Mikrofaservlies ist. Durch den mehrschichtigen Aufbau des Filtermaterials soll eine Optimierung der Tiefenfiltration in der Weise bewirkt werden, daß grobe Partikel in der Grobfilterschicht zurückgehalten werden, und daß die die Grobfilterschicht passierenden Feinstpartikel im Feinfilter der zweiten Schicht zurückgehalten werden.

Das bekannte Filtermaterial wird diesen Anforderungen jedoch nicht in allen Punkten gerecht. Bei der als Grobfilterschicht wirkenden ersten Schicht besteht die Gefahr, daß eine vollständige Vorabscheidung der Grobpartikel sowie eine deutliche Herabsetzung der Gesamtpartikelanzahl des zu filternden Mediums (z. B. Luft) nicht möglich sind, so daß die anzustrebende über die gesamte Filterschichttiefe gleichmäßige Staubeinlagerung nicht erzielt werden kann und daher die Filterstandzeit und die Wirtschaftlichkeit reduziert sind.

Die Filterwirkung der bekannten Grobfilterschicht ist nämlich in vielen Fällen nur ungenügend. Die Grobpartikel werden nicht gleichmäßig über die Schichtdicke des kompletten Filtermaterials gefiltert, sondern zum einen vorwiegend in dem Bereich abgelagert, wo sich die zweite Schicht, also die reinfilterschicht, an die erste Schicht anschließt. Außerdem besteht die Gefahr, daß sich die Grobpartikel als Filterkuchen schon auf der Oberfläche der ersten Schicht konzentrieren. Dadurch bildet sich in diesen Bereichen jeweils ein Filterkuchen, was zu einer Verstopfung des Filtermaterials führt. Dadurch steigt die Druckdifferenz am Filtermaterial bereits nach kürzerer Zeit auf größere Werte an, und dies führt zu unerwünscht kurzen Standzeiten des Filtermaterials.

Der Erfindung liegt die Aufgabe zugrunde, ein mehrschichtiges Filtermaterial für die Raumluftfiltration zu schaffen, welches sich durch einen verbesserten Abscheidegrad sowie durch ein wirtschaftliches verhalten während des Betriebes auszeichnet, welches also über einen längeren Zeitraum hinweg niedrige Druckverluste besitzt und sich durch hohe Standzeiten auszeichnet. Dabei soll die Dimensionierung des Filtermaterials hinsichtlich vorgegebener Trenngrade mit einfachen Mitteln möglich sein.

Die Lösung dieser Aufgabe erfolgt durch die im Patentanspruch 1 angegebenen Merkmale.

Bei der Erfindung bedeutet der Abscheidegrad das Verhältnis der in dem Filtermaterial gefilterten bzw. zurückgehaltenen Partikel zu den insgesamt im Medium vorhandenen Partikeln, wobei der Abscheidegrad in Prozent angegeben wird und normalerweise kleiner als 100 % ist.

Demgegenüber wird unter dem Trenngrad der Abscheidegrad verstanden, der sich auf eine konkrete Partikelgröße bezieht. Ferner versteht man unter dem mittleren Trenngrad den Abscheidegrad, der sich auf ein definiertes Partikelkollektiv, also auf Partikel innerhalb einer bestimmten Größenordnung, bezieht.

Ein Schwerpunkt der Erfindung liegt in der Ausgestaltung der ersten Schicht des Filtermaterials, welche die Grobfilterschicht bildet. Dieser ersten Schicht wird bei der Erfindung eine wesentlich verbesserte Filterwirkung und ein höherer Abscheidegrad zugewiesen, wobei ein wesentlicher Gesichtspunkt der Erfindung darin besteht, den Abscheidegrad der ersten Schicht in Abhängigkeit des gewünschten Abscheidegrades des kompletten Filtermaterials zu wählen. Je höher der gewünschte Abscheidegrad ist, um so höher wird der Abscheidegrad der ersten Schicht festgelegt.

Daneben besitzt die erste Schicht eine hohe Porosität von 95 %. Für die verbleibende Filterung der von der ersten Schicht nicht festgehaltenen Feinpartikel dient zumindest die zweite Schicht, und gegebenenfalls eine oder mehrere weitere Feinfilterschichten. Die Porosität der zweiten Schicht und gegebenenfalls weiterer Schichten beträgt mehr als 85%.

Bei der Erfindung wird erreicht, daß die erste Schicht eine optimale Filterung der Grobpartikel bewirkt, und zwar in der Weise, daß die Grobpartikel in etwa gleichmäßig über die gesamte Schichtdicke der ersten Schicht verteilt festgehalten werden und sich nicht an der Übergangsstelle zur zweiten Schicht bzw. schon auf der Oberfläche der ersten Schicht konzentrieren Dies ist im wesentlichen auf die der ersten Schicht beigemessenen Porösität zurückzuführen Insgesamt ergibt sich bei dem erfindungsgemäßen Filtermaterial eine Verbesserung der Tiefenfiltration, indem die Grobpartikel in der Grobfilterschicht und die Feinstpartikel in der Feinfilterschicht zurückgehalten werden. Dadurch kann die Druckdifferenz am Filtermaterial über eine lange Zeitdauer niedrig gehalten werden, woraus sich in gewünschter Weise eine hohe Standzeit des Filtermaterials ergibt.

Ein weiterer Schwerpunkt der Erfindung liegt in der grundsätzlichen Überlegung, die einzelnen Schichten in der Weise zueinander zu positionieren, daß eine fraktionierte bzw. stufenweise Abscheidung der gesamten Partikel in den Einzelschichten erfolgt. Dabei kommt es zu einer Abscheidung bzw. Trennung von vermehrt groben Partikeln an der Eingangsseite des Filtermaterials (in Durchströmungsrichtung des Filtermaterials gesehen) bzw. in den an der Eingangsseite liegenden Schichten, während in den auf der Ausgangsseite befindlichen Schichten vermehrt Feinpartikel abgeschieden werden. Daraus ergibt sich ein entscheidender Vorteil der Erfindung, der darin besteht, eine steuerbare und möglichst gleichmäßige Partikeleinlagerung in den einzelnen Schichten vorzusehen, um somit hohe Standzeiten zu erreichen, die auf die gewünschte jeweilige Filterklasse hinsichtlich bestimmter Kenngrößen erwünscht sind.

Dabei ist es im Sinne der Erfindung Vorteilhaft daß kontinuierliche Übergänge in den Grenzschichten zwischen den einzelnen Schichtend es Filtermaterials entstehen, und daß in diesen Grenzschichten keine unkontrollierte Verblockung durch abgeschiedene Partikel entsteht.

Gemäß einer vorteilhaften Weiterbildung der Erfindung erfolgt die Dimensionierung der einzelnen Schichten des Filtermaterials gemäß der im Patentanspruch 4 angegebenen Formel, wodurch sich die angestrebte fraktionierte Abscheidung der Gesampartikelverteilung in den einzelnen Schichten erreichen läßt.

Eine andere zweckmäßige Ausgestaltung der Erfindung sieht vor, daß zwischen benachbarten Schichten Mischzonen bestehen, die ein Gemisch der Fasern der benachbarten Schichten umfassen. Das Filtermaterial ist in der Weise hergestellt, und die Fasern sind somit im Bereich der Mischzonen so angeordnet und ausgerichtet, daß die Durchlässigkeit des Filtermaterials durch das Vorhandensein dieser Mischzonen nicht wesentlich beeinflußt wird. Insbesondere bleibt der Grundgedanke der stufenweise und fraktionierten Abscheidung der Partikel in den einzelnen Schichten erhalten.

Dadurch läßt sich die generell mit der Erfindung erzielte, über die Filterschichttiefe gleichmäßige Staubeinlagerung und hohe Staubspeicherfähigkeit sowie die hohe Standzeit besonders günstig erzielen. Dies läßt sich auf die große insgesamt zur partikelabscheidung zur Verfügung stehende Faseroberfläche der Fasern der ersten Schicht zurückführen, wobei die große innere Faseroberfläche und die hohe Staubspeicherfähigkeiten wesentliche Vorteile der Erfindung sind.

In weiterer zweckmäßiger Ausgestaltung der Erfindung ist die in Durchströmungsrichtung des Filtermaterials am Ende liegende letzte Schicht mit einem Spinnvlies als mechanischem Träger verbunden, wobei die Fasern der letzten Schicht und des Trägers zumindest teilweise miteinander vermischt sein können.

Die letzte Schicht (Feinfilterschicht) und der als Spinnvlies ausgebildete mechanische Träger sind dabei durch ein Verbundvliesmaterial aus wenigstens zwei Komponenten gebildet, nämlich aus im wesentlichen endlosen groben Filamenten mit relativ großen Durchmessern, und aus im wesentlichen diskontinuierlichen feinen Mikrofasern mit relativ kleinen Durchmessern, wobei das Verbundvliesmaterial durch ein Gemisch der genannten Komponenten ohne diskrete schichtförmige Phasengrenzen zwischen den Komponenten gebildet ist, und wobei das Verbundvliesmaterial in einem integrierten Vliesbildungsvorgang auf ein und derselben Legevorrichtung einer Vliesspinnanlage hergestellt ist.

Ein solches Verbundvliesmaterial, das bei der Erfindung in vorteilhafter Weise eingesetzt werden kann, ist an sich bekannt und in dem deutschen Patent DE-C-39 20 066 näher beschrieben.

Weiterhin kann in zweckmäßiger Ausgestaltung der Erfindung vor der ersten Schicht eine weitere Grobfilterschicht angeordnet werden, die zusammen mit der ersten Schicht ein mehrstufiges Grobfilter des gesamten Filtermaterials bildet.

Im Rahmen der Erfindung ist es auch möglich, der zweiten Schicht - und gegebenenfalls den weiteren folgenden Schichten (Feinfilterschichten) - kurze Fasern in Form von Stapelfasern oder Aktivkohlefasern oder auch Feststoffpartikel beizumischen, wobei diese Beimischungen die Filtereigenschaften der jeweiligen Schichten verbessern.

Nach einer anderen zweckmäßigen Ausgestaltung der Erfindung ist vorgesehen, eine oder mehrere Schichten des Filtermaterials elektrostatisch positiv oder negativ aufzuladen, so daß die Filtereigenschaften der betreffenden Schichten verbessert werden.

Weitere zweckmäßige Ausgestaltungen und vorteilhafte Weiterbildungen der Erfindung ergeben sich aus den Unteransprüchen.

Gemäß einem bevorzugten Ausführungsbeispiel der Erfindung ist das Filtermaterial aus einer ersten als Grobfilter wirkenden Schicht und einer zweiten als Feinfilter wirkenden Schicht mit einem Träger zusammengesetzt und weist die nachfolgenden Kenngrößen auf, wobei dieses Filtermaterial zur Raumluftfiltration in der Filterklasse EU7 (gemäß DIN 24185 bzw F7 gemäß EN 779) einsetzbar ist..

Erste Schicht: Als Material kommt ein Polyester-Stapelfaservliesstoff zur Anwendung; das Flächengewicht beträgt 120 g/m$^2$; Porösität größer als 98 %; Faserdurchmesser etwa 12 μm; Schichtdicke ca. 5 mm.

Zweite Schicht und Träger: Die zweite Schicht und der Träger bilden zusammen ein an sich bekanntes Verbundvliesmaterial, aus zwei Komponenten gemäß den Merkmalen des Anspruchs 14, wobei Spinnvliesfasern sowie Melt-Blown-Fasern zur Anwendung kommen; die Melt-Blown-Fasern (Mikrofasern) bestehen aus PP (Polypropylen); das Flächengewicht des Verbundvliesmaterials (also der zweiten Schicht und des Trägers zusammen) beträgt 70 g/m$^2$; Schichtdicke ca. 2 mm; Porösität etwa 96 %; mittlerer Faserdurchmesser der Mikrofasern ca. 2 μm; mittlerer Faserdurchmesser der Spinnvlies-Fasern ca. 20 um.

## Patentansprüche

1. Raumluftfilter, ausgenommen HEPA-Filter, in Form eines mehrschichtigen Filtermaterials aus synthetischem Faservliesstoff mit mindestens zwei, unterschiedliche Filtereigenschaften aufweisenden Schichten, von denen die erste Schicht als Grobfilterschicht und mindestens eine Schicht als Feinfilterschicht ausgebildet ist, sowie gegebenenfalls mit einem Träger auf der. Durchströmungsrichtung des Filtermaterials hinteren Seite, **dadurch gekennzeichnet,** daß der Abscheidegrad der ersten Schicht so bemessen ist, daß in der ersten Schicht mindestens 20 % der in der Raumluft enthaltenden Gesamtpartikel abgefiltert sind, daß die erste Schicht eine Porösität von mindestens 95 % besitzt und daß die erste Schicht durch ein Gemisch aus synthetischen Fasern und Mikrofasern mit einem mittleren Faserdurchmesser von kleiner/gleich 15 µm gebildet ist, daß für die verbleibende Filterung der in der Raumluft vorhandenen Feinpartikel zumindest die zweite Schicht vorgesehen ist, und daß die zweite Schicht eine Porösität von größer als 85 % besitzt.

2. Filtermaterial nach Anspruch 1, **dadurch gekennzeichnet,** daß der mittlere Trenngrad der ersten Schicht unter Berücksichtigung von den in der Raumluft vorhandenen Grobpartikeln von größer als 10 µm bei zwei vorhandenen Schichten mindestens 20 % beträgt und bei mehr als zwei Schichten mit zunehmendem Gesamt-Abscheidegrad und mit zunehmender Anzahl der Schichten einen jeweils größeren Trenngrad als 20 % aufweist, und daß für die verbleibende Filterung der Feinpartikel von kleiner als 10 µm zumindest die zweite Schicht vorgesehen ist.

3. Filtermaterial nach Anspruch 1 und/oder 2, dadurch gekennzeichnet, daß die erste Schicht durch einen Vliesstoff gebildet ist und aus natürlichen Fasern oder aus synthetischen Stapelfasern oder aus synthetischen Endlosfasern oder aus einem Gemisch dieser Fasern besteht.

4. Filtermaterial nach einem oder mehreren der vorhergehenden Ansprüche 1 - 3, dadurch gekennzeichnet, daß der Aufbau aller Schichten mit dem jeweils gewünschten Trenngrad durch die an sich bekannte Formel vorgegeben ist

$$T(x) = 1 - \exp \{ - f * phi(x) \}$$

mit folgenden Bedeutungen: T(x) ist der Trenngrad als Funktion der Partikelgröße x; f = dimensionsloser Filterparameter, der lediglich von Geometriegrößen eines Filters abhängt; phi = Einzelfaserabscheidegrad; phi(x) hängt von den Partikel- und Fasereigenschaften ab.

5. Filtermaterial nach nach einem oder mehreren der vorhergehenden Ansprüche 1 - 4, dadurch gekennzeichnet, daß benachbarte Schichten derart aneinanderliegen, daß sie einander teilweise durchdringen und zwischen ihnen Mischzonen bestehen, die ein Gemisch der Fasern der benachbarten Schichten umfassen, und daß das Filtermaterial so hergestellt und die Mischzonen so ausgebildet sind, daß sie die Durchlässigkeit des Filtermaterials nicht oder nicht wesentlich beeinflussen.

6. Filtermaterial nach einem oder mehreren der vorhergehenden Ansprüche 1 - 5, dadurch gekennzeichnet, daß die erste Schicht aus einem Gemisch von Polyester-Bindefasern und Polyesterfasern sowie polyestermikrofasern mit einem Fasertiter kleiner/gleich 1 dtex besteht.

7. Filtermaterial nach Anspruch 6, dadurch gekennzeichnet, daß die erste Schicht aus einem Gemisch von Polyester-Bindefasern 2,0 dtex, Polyesterfasern 1,3 dtex und Polyesterfasern 0,8 dtex besteht.

8. Filtermaterial nach einem oder mehreren der vorhergehenden Ansprüche 1 - 7, dadurch gekennzeichnet, daß die zweite Schicht und gegebenenfalls weitere Schichten aus nach dem Melt-Blown-Verfahren erzeugten Mikrofasern besteht.

9. Filtermaterial nach einem oder mehreren der vorhergehenden Ansprüche 1 - 8, dadurch gekennzeichnet, daß die Porosität der zweiten Schicht größer als 93 % ist.

10. Filtermaterial nach einem oder mehreren der vorhergehenden Ansprüche 1 - 9, dadurch gekennzeichnet, daß das Flächengewicht der zweiten Schicht größer als 20 g/m$^2$ ist.

11. Filtermaterial nach einem oder mehreren der vorhergehenden Ansprüche 1 - 10, dadurch gekennzeichnet, daß zumindest eine der Feinfilterschichten als mikroporöse Membran ausgebildet ist.

12. Filtermaterial nach einem oder mehreren der vorhergehenden Ansprüche 1 - 11, dadurch gekennzeichnet, daß die in Durchströmungsrichtung des Filtermaterials am Ende liegende letzte Schicht mit einem Spinnvlies als mechanischer Träger verbunden ist.

13. Filtermaterial nach Anspruch 12, dadurch gekennzeichnet, daß die letzte Schicht und der als Spinnvlies ausgebildete mechanische Träger durch ein Verbundvliesmaterial aus wenigstens zwei Komponenten gebildet sind, nämlich aus im wesentlichen endlosen groben Filamenten mit relativ großen Durchmessern, und aus im wesentlichen diskontinuierlichen feinen Mikrofasern mit relativ kleinen Durchmessern, wobei das Verbundvliesmaterial durch ein Gemisch der genannten Komponenten ohne diskrete schichtförmige Phasengrenzen zwischen den Komponenten gebildet ist, und wobei das Verbundvliesmaterial in einem integrierten Vliesbildungsvorgang auf ein und derselben Legevorrichtung einer Vliesspinnanlage hergestellt ist.

14. Filtermaterial nach einem oder mehreren der vorhergehenden Ansprüche 1 -13, <u>dadurch gekennzeichnet</u>, daß in Durchströmungsrichtung des Filtermaterials gesehen vor der ersten Schicht eine Anfangsschicht angeordnet ist, die zusammen mit der ersten Schicht ein mehrstufiges Grobfilter des gesamten Filtermaterials bildet.

15. Filtermaterial nach einem oder mehreren der vorhergehenden Ansprüche 1 - 14, <u>dadurch gekennzeichnet</u>, daß der zweiten Schicht und gegebenenfalls den weiteren vorhandenen Schichten kurze Fasern in Form von Stapelfasern beigemischt sind, welche die selektiven Filtereigenschaften der jeweiligen Schichten verbessern.

16. Filtermaterial nach einem oder mehreren der vorhergehenden Ansprüche 1 - 14, <u>dadurch gekennzeichnet</u>, daß der zweiten Schicht und gegebenenfalls den weiter vorhandenen Schichten Aktivkohlefasern beigemischt sind, welche die selektiven Filtereigenschaften der jeweiligen Schichten verbessern.

17. Filtermaterial nach einem oder mehreren der vorhergehenden Ansprüche 1 - 14, <u>dadurch gekennzeichnet</u>, daß der zweiten Schicht und gegebenenfalls den weiter vorhandenen Schichten Feststoffpartikel beigemischt sind, welche die selektiven Filtereigenschaften der jeweiligen Schichten verbessern.

18. Filtermaterial nach einem oder mehreren der vorhergehenden Ansprüche 1 - 17, <u>dadurch gekennzeichnet</u>, daß eine oder mehrere Schichten des Filtermaterials elektrostatisch positiv oder negativ aufgeladen sind, so daß die selektiven Filtereigenschaften der betreffenden Schichten verbessert werden.

## Claims

1. Room air filter, excluding HEPA filter, in the form of a multi-layer filter material made of synthetic non-woven fleece with at least two layers with different filter properties, of which the first layer is modelled as a coarse filter layer and at least one layer as micro-filter layer, and, if applicable, with a backing material at the rear in the direction of flow through the filter material, <u>characterised in that</u> the degree of filtering provided by the first layer is such that at least 20% of the total particles contained in the room air are filtered out in the first layer, that the first layer has a porosity of at least 95%, that the first layer is formed from a blend of synthetic fibres and microfibres with an average fibre diameter of less than or equal to 15 μm, that there is at least one second layer for filtering out the remaining fine particles from the room air, and that the second layer has a porosity greater than 85%.

2. Filter material according to Claim 1, <u>characterised in that</u> the average degree of separation of the first layer, given the presence of coarse particles in the room air greater than 10 μm, is at least 20% where there are two layers, the overall degree of filtering increasing with the increasing number of layers where there are more than two layers such that it is greater than 20%, and that there is at least one second layer for the remaining filtering of the fine particles which are smaller than 10 μm.

3. Filter material according to Claim 1 and/or 2, <u>characterised in that</u> the first layer is formed by a non-woven fabric consisting of natural fibres, of synthetic staple fibres, of synthetic filaments or of a blend of these fibres.

4. Filter material according to one or more of the above Claims 1 - 3, <u>characterised in that</u> the structure of all of the layers, each with the required degree of separation, is given by the known formula

$$T(x) = 1 - \exp\{ -f * phi(x) \}$$

where T (x) is the degree of separation as a function of the particle size x; f = non-dimensional filter parameter which depends only on the geometrical dimensions of a filter; phi = degree of filtering of the individual fibres; phi (x) depends on the properties of the particles and fibres.

5. Filter material according to one or more of the above Claims 1 - 4, <u>characterised in that</u> the adjacent layers are situated such in relation to one another that they partially penetrate one another, producing blend zones between them containing a blend of the fibres of the adjacent layers, and that the filter material is manufactured in such a way and the blend zones formed in such a way that they do not affect or do not significantly affect the permeability of the filter material.

6. Filter material according to one or more of the above Claims 1 to 5, <u>characterised in that</u> the first layer consists of a blend of polyester binding fibres with polyester fibres and polyester microfibres with a fibre titre less than or equal to 1 dtex.

7. Filter material according to Claim 6, <u>characterised in that</u> the first layer consists of a blend of 2.0 dtex polyester binding fibres, 1.3 dtex polyester fibres and 0.8 dtex polyester fibres.

8. Filter material according to one or more of the above Claims 1 - 7, <u>characterised in that</u> the second layer and, if applicable, further layers consist of microfibres produced using the melt-blown process.

9. Filter material according to one or more of the above Claims 1 - 8, <u>characterised in that</u> the porosity of the second layer is greater than 93%.

10. Filter material according to one or more of the above Claims 1 - 9, <u>characterised in that</u> the mass per unit area of the second layer is greater than 20 g/m$^2$.

11. Filter material according to one or more of the above Claims 1 - 10, <u>characterised in that</u> at least one of the fine filter layers is a microporous membrane.

12. Filter material according to one or more of the above Claims 1 - 11, <u>characterised in that</u> a spun fleece is joined to the final layer in the direction of flow through the filter material as mechanical backing.

13. Filter material according to Claim 12, <u>characterised in that</u> the final layer and the spun fleece mechanical backing are formed from a composite fleece material comprising at least two components, namely essentially continuous coarse filaments with relatively large diameters and essentially discontinuous fine microfibres with relatively small diameters, the composite fleece material being formed from a blend of the named components without discrete layer-type interfaces between the components and being manufactured in an integrated fleece-forming process on the same layering apparatus of the fleece spinning plant.

14. Filter material according to one or more of the above Claims 1 - 13, <u>characterised in that</u> an initial layer is assigned before the first layer in the direction of flow through the filter material, this initial layer together with the first layer forming a multi-layer coarse filter of the overall filter material.

15. Filter material according to one or more of the above Claims 1 - 14, <u>characterised in that</u> short fibres in the form of staple fibres are added to the second layer, and, if applicable, further existing layers, these improving the selective filter properties of the layers in question.

16. Filter material according to one or more of the above Claims 1 - 14, <u>characterised in that</u> activated carbon fibres are added to the second layer, and, if applicable, further existing layers, these improving the selective filter properties of the layers in question.

17. Filter material according to one or more of the above Claims 1 - 14, <u>characterised in that</u> solid matter particles are added to the second layer, and, if applicable, further existing layers, these improving the selective filter properties of the layers in question.

18. Filter material according to one or more of the above Claims 1 - 17, <u>characterised in that</u> one or more layers of the filter material receive a positive or negative electrostatic charge, improving the selective filter properties of the affected layers.

**Revendications**

1. Filtre d'air ambiant, à l'exception du filtre HEPA, sous forme d'une matière filtrante multicouche en produit non-tissé synthétique en fibres, comportant au moins deux couches présentant des caractéristiques de filtrage différentes, la première couche formant une couche de filtrage grossier et au moins une couche formant une couche de filtrage fin, ainsi qu'éventuellement un porteur sur le côté arrière, dans le sens transversal, de la matière filtrante, **caractérisé en ce** que le degré de séparation de la première couche est calculé de façon que, dans la première couche, au moins 20% de l'ensemble des particules contenues dans l'air ambiant soient séparées par filtrage, en ce que la première couche possède une porosité d'au moins 95 % et qu'elle soit formée d'un mélange de fibres et microfibres synthétiques dont le diamètre de fibre moyen est égal ou inférieur à 15 μm, en ce que, pour le filtrage résiduel des particules fines présentes dans l'air ambiant, est prévue la seconde couche, et en ce que la seconde couche a une porosité supérieure à 85 %.

2. Matière filtrante suivant la revendication 1, **caractérisée en ce** que le degré de séparation moyen de la première couche, compte tenu des particules de plus de 10 μm présentes dans l'air ambiant, se monte, pour deux couches présentes, à au moins 20% et, pour plus de deux couches, avec un degré de séparation global croissant et un nombre croissant de couches, présente un degré de séparation respectivement supérieur à 20 %, et en ce que, pour le filtrage résiduel des particules fines inférieures à 10 μm, est prévue au moins la deuxième couche.

3. Matière filtrante suivant la revendication 1 et/ou 2, **caractérisée en ce** que la première couche est formée d'une matière non tissée, en fibres naturelles, ou en fibres discontinues, ou en fibres continues synthétiques, ou en un mélange de ces fibres.

4. Matière filtrante suivant l'une ou plusieurs des revendications précédentes 1 à 3, **caractérisée en ce** que la structure de toutes les couches, avec respectivement le degré de séparation voulu, est prédéterminée par la formule connue en soi

$$T(x) = 1 - \exp \{ - f * phi(x) \}$$

où T(x) est le degré de séparation en fonction de la grosseur x des particules; f = un paramètre de filtrage sans dimension qui dépend uniquement des dimensions géométriques d'un filtre; phi = degré de séparation d'une seule fibre; phi(x) dépend des caractéristiques des particules et des fibres.

5. Matière filtrante suivant l'une ou plusieurs des revendications précédentes 1 à 4, **caractérisée en ce** que des couches voisines collent l'une contre l'autre de façon qu'elles se pénètrent partiellement et qu'entre elles existent des zones mixtes qui comportent un mélange de fibres des couches voisines, et en ce que la matière filtrante est préparée et les zones mixtes sont formées de façon qu'elles n'influencent pas, ni essentiellement la perméabilité de la matière filtrante.

6. Matière filtrante suivant l'une ou plusieurs des revendications précédentes 1 à 5, **caractérisée en ce** que la première couche est en un mélange de fibres de liaison en polyester et en fibres de polyester, ainsi que de microfibres de polyester avec un titre de fibre inférieur ou égal à 1 dtex.

7. Matière filtrante suivant la revendication 6, **caractérisée en ce** que la première couche est en un mélange de fibres de liaison en polyester de 2,0 dtex, en fibres de polyester de 1,3 dtex et de fibres de polyester de 0,8 dtex.

8. Matière filtrante suivant l'une ou plusieurs des revendications précédentes 1 à 7, **caractérisée en ce** que la deuxième couche et, éventuellement, d'autres couches sont en microfibres préparées suivant le procédé soufflé-fondu.

9. Matière filtrante suivant l'une ou plusieurs des revendications précédentes 1 à 8, **caracterisée en ce** que la porosité de la deuxième couche est supérieure à 93 %.

10. Matière filtrante suivant l'une ou plusieurs des revendications précédentes 1 à 9, **caractérisée en ce** que le grammage de la deuxième couche est supérieur à 20 g/m$^2$.

11. Matière filtrante suivant l'une ou plusieurs des revendications précédentes 1 à 10, **caractérisée en ce** qu'au moins une des couches de filtrage fin est formée d'une membrane microporeuse.

12. Matière filtrante suivant l'une ou plusieurs des revendications précédentes 1 à 11, **caractérisée en ce** que la dernière couche qui se trouve à la fin, dans le sens transversal de la matière filtrante, est liée à un non-tissé textile qui sert de porteur mécanique.

13. Matière filtrante suivant la revendication 12, **caractérisée en ce** que la dernière couche et le porteur mécanique fait de non-tissé textile sont formés par une matière de liaison en non-tissé en au moins deux composants, c'est-à-dire en filaments grossiers essentiellement continus de diamètres relativement grands et en microfibres fines, essentiellement discontinues, de diamètres relativement faibles, la matière de liaison en non-tissé étant formée par un mélange de composants connus, sans limites de phases discrètes sous forme de couches entre les composants, et la matière de liaison en non-tissé étant préparée dans un procédé de préparation intégré de non-tissé sur un même dispositif de dépôt d'une installation de textile en non-tisse.

14. Matière filtrante suivant l'une ou plusieurs des revendications précédentes 1 à 13, **caractérisée en ce** que, dans le sens de traversée de la matière filtrante, est prévue, devant la première couche, une couche de tête qui forme avec la première couche un filtre grossier multicouche de matière filtrante globale.

15. Matière filtrante suivant l'une ou plusieurs des revendications précédentes 1 à 14, **caractérisée en ce** que la deuxième couche et, eventuellement, les autres couches présentes sont additionnées de fibres courtes sous la forme de fibres empilées qui améliorent les caractéristiques sélectives de filtrage de chaque couche.

16. Matière filtrante suivant l'une ou plusieurs des revendications précédentes 1 à 14, **caractérisée en ce** que la deuxième couche et, éventuellement, les autres couches présentes sont additionnées de fibres de charbon actif qui améliorent les caractéristiques sélectives de filtrage de chaque couche.

17. Matière filtrante suivant l'une ou plusieurs des revendications précédentes 1 à 14, **caractérisée en ce** que la deuxième couche et, éventuellement, les autres couches présentes sont additionnées de particules de matières solides qui améliorent les caractéristiques sélectives de filtrage de chaque couche.

18. Matière filtrante suivant l'une ou plusieurs des revendications précédentes 1 à 17, **caractérisée en ce** qu'une ou plusieurs couches de matière filtrante sont positivement ou négativement statiquement chargées de manière que les caractéristiques sélectives de filtrage des couches considérées soient améliorées.